# EUROPEAN PATENT SPECIFICATION

(11) **EP 2 408 297 B1**
(45) Date of publication and mention of the grant of the patent: **30.11.2016**
(21) Application number: 10710390.5
(22) Date of filing: 12.03.2010
(51) Int. Cl.: A01N 43/90, A01N 25/04, A01N 25/12, A01N 25/14, A01N 25/22, A01N 25/26, A01P 7/04

(54) **FORMULATION COMPRISING AVERMECTIN PARTICLES COATED WITH A PHOTO-PROTECTING AGENT**
FORMULIERUNG ENTHALTEND MIT EINER LICHTSCHUTZ-SUBSTANZ BESCHICHTETE AVERMECTIN-PARTIKEL
FORMULATIONS COMPRENANT DES PARTICLES D'AVERMECTINE COUVERTES AVEC UN AGENT PHOTO-PROTECTEUR

(30) Priority: 18.03.2009 GB 0904659
(43) Date of publication of application: 25.01.2012
(73) Proprietor: Syngenta Limited, Guildford, Surrey GU2 7YH (GB); Syngenta Participations AG, 4058 Basel (CH)
(72) Inventor: HEMING, Alexander Mark, CH-4333 Muenchwilen (CH); PIERCE, Andrew James, Berkshire RG42 6EY (GB); WILLIAMS, Johanna Martina, CH-4333 Muenchwilen (CH)
(74) Representative: Syngenta International AG
(86) International application number: PCT/GB2010/000464
(87) International publication number: WO 2010/106314

(56) References cited:
- WO-A1-2004/054718
- WO-A2-2007/053760
- US-A- 5 939 089
- DEMCHAK R J ET AL: "Photostability of Abamectin/Zein Microspheres", JOURNAL OF AGRICULTURAL AND FOOD CHEMISTRY, AMERICAN CHEMICAL SOCIETY, US, vol. 45, no. 1, 1 January 1997 (1997-01-01), pages 260-262, XP002457256, ISSN: 0021-8561, DOI: DOI:10.1021/JF960356N cited in the application

## Description

The present invention relates to defined pesticide compositions containing a low amount of photo-protecting agent, in particular compositions comprising the pesticide particles coated with a photo-protectant agent, to formulations comprising such compositions, to the use of such compositions and formulations and to a process for preparing such compositions and formulations.

Pesticides are typically applied to agricultural crops where they are biologically active in controlling pests on or within the leaves of the plants. Many pesticide compounds are degraded by sunlight (photolysed) or by chemical reactions with energetic species created by the action of sunlight, for example singlet oxygen, while on the leaf surface or within the leaf. Sometimes the rate of photo-degradation is so fast that the required biological control of the pests is lost prematurely. Loss of pesticide compound by photo-degradation must be compensated for in the quantity of pesticide compound initially applied to the crop. The result is that more pesticide compound than is actually required for effective biological control of the pests is applied, which has commercial and environmental implications. Thus, there exists a need for pesticide compositions whereby the rate of photo-degradation of the pesticide is reduced.

It is common practice to include an anti-oxidant in an agrochemical product to increase its shelf life. This is separate and distinct from the deliberate addition of a photo-protecting compound in order to reduce the rate of photo-degradation when the product is applied to crops in the field.

Some examples of the use of photo-protecting compounds to reduce the rate of photo-degradation of a pesticide and thereby improve its efficacy exist in the art.

Granular pesticide compositions comprising lignin or modified lignins are described in chapter 8 of Controlled-Release Delivery Systems for Pesticides (ed. Scher, H., Marcel Dekker, New York, 1999). These compositions are prepared by co-melting the pesticide with a lignin and cooling the resultant melt to form a glass, which is then further processed to form granules.

WO03005816 describes micro-particles comprising pesticide particles in a lignin matrix prepared by forming a water-in-oil emulsion of the pesticide and a lignin co-dissolved in an organic solvent and then removing the solvent to give solid micro-particles. The disclosed compositions comprise lignin at more than seven times the weight of pesticide compound. This high photo-protector to pesticide ratio is necessary in order to form spherical micro-particles that fully entrap all the pesticide particles.

US5965123 describes pesticide compositions wherein the pesticide compound is present as particles entrapped in a matrix comprising a "pH-dependent polymer", a plasticiser and an ultraviolet protector.

WO0213608 describes oil based dispersions of pesticide compounds coated with a lignin. Pesticide particles are co-formulated with the lignin by means of common methods such as suspending the pesticide particles in aqueous lignin solution and then spray drying to give a solid material which comprises a plurality of pesticide particles entrapped in a lignin matrix.

US5939089 describes a method of encapsulating a pesticide with an ultraviolet protectant comprising the steps of forming a slurry of a pesticide and a lignin-containing material, and spraying a stream of acid and the slurry into contact with one another to precipitate the lignin-containing material onto the pesticide and form a protective coating on the pesticide.

Demchak and Dybas demonstrated that abamectin, an insecticide used principally in agriculture, can be entrapped in a matrix of zein, a plant derived protein, to form a composition with increased photostability (Journal of Agricultural and Food Chemistry; 45, 1, 1997, 260-262, pub. American Chemical Society).

In all these cases the photo-protecting compound is formulated in a solid matrix, wherein each granule or micro-particle of the composition contains a plurality of pesticide particles. Even for those approaches where the solid composition is further processed the pesticide particles are not discrete, with an individual coating of photo-protecting compound, but exist as clusters bound together by a matrix. The disadvantage of these approaches is that the amount of photo-protecting compound required relative to the amount of pesticide is very high. The weight ratio of photo-protecting compound to pesticide exceeds 1:1 in every case. It is not cost or volume efficient to use large amounts of photo-protecting compound relative to pesticide.

WO0226040 describes a process for coating particles suspended in water by using the natural electrostatic charge on the particle surfaces to attract and bind oppositely charged polymers. Photo-protecting particles were bound to the surface of the particles during this process. It will be apparent to one skilled in the art that such coacervation methods are difficult to carry out because the outcome is highly dependent on the nature of the particles and the polymers. It is common when carrying out coacervation processes to prepare clusters of particles bound together with the polymer, rather than discrete particles, and controlling the cluster size is difficult. It is also a disadvantage of this method that the size and nature of the photo-protecting particles must be very carefully selected in order that they pack around the pesticide particles and give effective photo-protection.

WO06077394 describes the use of polymeric microcapsules wherein a photo-protecting dye is co-dissolved with a pesticide or other biologically active compound, US2007275853 describes polymeric microcapsules with a photo-protecting stabiliser bound into the microcapsule wall or co-dissolved with a biologically active compound within the microcapsule and US5455048 describes microcapsules comprising an oily liquid core wherein "sunscreen" inorganic particles are dispersed.

It is a disadvantage of microencapsulation that it is not a suitable process for many pesticide compounds since they must be soluble in a suitable solvent and chemically inert with respect to the encapsulation process used. There are also cost implications associated with microencapsulation, for example, the increased cost of processing and the relatively low total loading of pesticide compound that can be incorporated into the product.

EP1306008 describes conventional water dispersible granules comprising a plant based material as filler and, optionally, a particulate photo-protecting material such as carbon black or clay. Although no data are presented, one skilled in the art will appreciate that a relatively small amount of a particulate photo-protecting material relative to pesticide will not be effective to photo-protect the pesticide in the dry spray deposit on a leaf surface because the discrete photo-protector and pesticide particles are not closely associated and are likely to sit side by side instead, leaving the pesticide particles exposed to sunlight.

WO07053760 describes compositions of pesticides that are degraded by singlet oxygen, a common photo-chemical degradation mechanism, that are co-formulated with an activity-enhancer that protects or stabilises the pesticide from reaction with singlet oxygen, in other words, an anti-oxidant. In the examples given the pesticide and anti-oxidant compounds are simply co-formulated or mixed together immediately prior to spraying (tank mixed). The weight ratio used is between 2 and 80 parts anti-oxidant to 1 part pesticide.

Thus, there exists a need for a pesticide composition comprising a pesticide that is photo-protected by low amounts of photo-protecting compound relative to pesticide, in particular where the photo-protecting compound and pesticide are closely associated with one another in order to be most effective and which may be prepared by a process that is effective for a wide range of pesticides.

The present invention relates to compositions comprising a pesticide, i.e. emamectin benzoate, having particles of mean diameter from 1 to 10µm and a photo-protecting agent, where the total weight of the agent in the composition does not exceed 20% of the total weight of the particles plus the agent. These compositions have surprisingly been found to address the disadvantages of the prior art.

Accordingly, the present invention provides in a first aspect a composition comprising a pesticide (A) which is emamectin benzoate and a photo-protecting agent, wherein each emamectin benzoate particle is coated with the photo-protecting agent, wherein the mean diameter of the pesticide (A) particles is from 1 to 10µm and where the amount of photo-protecting agent in the composition is from 0.1 to 20% of the total weight of the pesticide (A) particles plus the agent, and
wherein the photo-protecting agent is ethylenebis(oxyethylene)bis-(3-(5-tert-butyl-4-hydroxy-m-tolyl)-propionate).

In an embodiment, a composition of the first aspect is obtainable by coating each pesticide (A) particle with the photo-protecting agent, such that the photo-protecting agent and pesticide are closely associated with one another.

The mean diameter of the particles is that of the coated particles; and similarly the total weight of the pesticide (A) particles plus the agent is that of the total weight of the coated pesticide (A) particles.

The particles present in the composition, whether coated or uncoated, are single solid particles or mononucleate solid particles.

Compositions comprising pesticide particles coated as discrete particles are known in the art. US2007275853 describes particles coated with a powder coating selected from various carbohydrate or cellulosic materials and WO9707676 describes crop protection solid particles, specifically herbicides, coated with various water insoluble materials to prevent degradation of the coated crop protection solid particles by other crop protection chemicals.

In an embodiment, the amount of pesticide (A) in a composition of the present invention is from 0.1 to 98, preferably 0.5 to 99, especially 1 to 95, %, based on the weight of the composition.

In the event the pesticide (A) particles are coated with the photo-protecting agent, the pesticide particles are at least partially coated with a photo-protecting agent (or coating) such that discrete pesticide particles are individually coated without gross agglomeration or entrapment of the particles within a matrix of the coating material. The particles can be referred to as single solid particles or mononucleate solid particles. In this case, the term "partially coated" means that the particles are, on average, nearly completely coated, but that the coating may not be completely contiguous around the entire surface of every particle (i.e. there may still be portions of the surfaces of some particles that have not been coated). Therefore, the term "at least partially coated" covers the situations where (i) all particles are fully coated; (ii) some particles are fully coated whilst others are partially [almost fully] coated; and (iii) all the particles are partially [almost fully] coated. The coating on the pesticide particles of the present invention has a photo-protecting action; the extent to which the particles must be coated is such that the coating provides the pesticide particles with an effective level of protection against photo-degradation.

The photo-protecting agent used in this invention is ethylenebis(oxyethylene)bis-(3-(5-tert-butyl-4-hydroxy-m-tolyl)-propionate) (available, for example, as IrganoxTM 245).

The photo-protecting agent used in the coating should act to reduce the rate of degradation of the pesticide due to the action of sunlight.

In the event of the photo-protecting agent is coated on the pesticides, without being bound by any particular theory, it is currently believed that the coating of photo-protecting agent used in the present invention is especially effective because the photo-protecting agent is closely associated with the pesticide compound at the surface of each particle, where the photo-degradation is most likely to occur and therefore where it is most needed.

The amount of photo-protecting agent in the composition, preferably coated on the pesticide particles, of the present invention is preferably from 0.1 to 20%, more suitably from 0.5 to 18%, advantageously from 1 to 15% , most suitably from 2 to 10%, by weight of total weight the particles and agent. The amount of photo-protecting material needed in any particular composition, to be effective, will depend on many variables, such as the photosensitivity of the pesticide, the choice of photo-protecting compound used and the size of the pesticide particles. The skilled user will be able to select a suitable coating material for each combination of desired pesticide and particle size.

The mean diameter of the pesticide particles, preferably coated pesticide particles, of the present invention is from 1 to 10µm, especially 2 to 6µm. Accordingly, the preferred particle size at D[0.9]'s (the size below which 90% of the number of particles fall - see method ISO 13320-1:1999 for further details) is 4-10µm. Methods to prepare pesticide particles of the preferred size range prior to coating will be known to those skilled in the art, for example air-jet milling, micronisation, dry grinding, hammer milling, pin milling, bead milling or ultra-sonic comminution. It is not an intention of the present invention to be limited by the process used to prepare the pesticide particles prior to coating them. In this case, mean diameter is taken to mean the number average mean diameter, as measured by a suitable particle sizing technique such as dynamic light scattering. One skilled in the art will be familiar with the differences in the various statistical definitions of mean particle size and how to measure them.

Methods to prepare compositions according to the invention involve suitable mixing of the pesticide having a defined particle size and the photo-protecting agent in defined amounts. Such methods are known to a skilled person.

The coating process of the present invention is suitably one where photo-protecting agent can be delivered to the surface of pesticide particles in a controlled manner without agglomeration of said particles. More suitably the coating process of the present invention is a technique where the pesticide particles are introduced into the process as a dry powder, are then coated with a liquid photo-protecting agent coating material that becomes a solid coating on the particles during the process and where the coated particles exit the process in a dry, non-agglomerated state. Such coating processes must consist of a means of maintaining good mixing and movement of the particles, for example in a gas flow or fluidised bed, and a method of introducing the liquid coating material as either a hot melt, a solution in a volatile solvent or a liquid that reacts to become a solid in such a way as to distribute the liquid evenly over the particle surfaces. This is usually accomplished by spraying the liquid into a mass of particles in a gas stream or fluidised bed. Examples of this type of process are the one disclosed in WO9707676 or Wurster coating techniques.

The method used to prepare pesticide particles of the present invention of the preferred size range and then to coat them is most suitably that described in WO04054718. In this process the starting material for the solid particles is introduced to a centrifugal milling chamber via a high pressure gas jet and at the same time the molten liquid for the coating material is introduced into the same chamber by a separate spray nozzle. The ratio of liquid to solid is controlled by a regulating unit. The solid particles are thus reduced in size by comminution and coated with the liquid coating material in the same operation. The coated particles leave the mill once they are in a certain size range and are collected in a separating device.

The photo-protecting agent coating material for use in the most suitable embodiment of the present invention must therefore have the requisite properties for use in the process. That is, it must be able to be dissolved or melted, pumped and atomised during the process and must then solidify to give a coating on the particles that is not soft or tacky at room temperature and is resilient during the expected storage life of the final product. The coating material may also suitably consist of a combination of two or more photo-protecting compounds or of a combination of one or more photo-protecting compounds and inert compounds that may be added to increase the efficacy of the coating process. The coating material for use in the present invention is ethylenebis(oxyethylene)bis-(3-(5-tert-butyl-4-hydroxy-m-tolyl)-propionate) (available, for example, as IrganoxTM 245) and has a melting point of 76-79°C.

The composition of the invention can be formulated for a particular use. Preferably, the composition is formulated for protecting cultivated plants or their propagation materials. Accordingly, a composition of the invention can be applied to the plant in a conventional manner, such as foliar spray. Also, a composition can be formulated for seed treatment applications for controlling or preventing damage by pests and/or pathogens, which are found in agriculture and forestry, and can particularly damage the plant in the early stages of its development. Also envisaged are methods of applying to the soil, which can be via any suitable method, which ensures that the pesticide penetrates the soil, for example, nursery tray application, in furrow application, soil drenching, soil injection, drip irrigation, application through sprinklers or central pivot, incorporation into soil (broad cast or in band) are such methods.

The compositions of the invention can be used in agriculture to improve plant growth. Examples of target crop plants include especially field crops fruits, vegetables, nuts, berries, tropical plantations, ornamentals and others, such as wheat, barley, rye, oats, rice, maize, sorghum, beans, lentils, peas, soybeans, rape, mustard, poppy, sugar- and fodder- beet, cotton, flax, hemp, jute, sunflowers, castor oil, groundnuts, potatoes, sweet potatoes, tobacco, sugar cane, apples, pears, plums, peaches, nectarines, apricots, cherries, oranges, lemons, grapefruit, mandarins, olives vines, hops, almonds, walnuts, hazelnuts, avocado, bananas, tea, coffee, coconut, cocoa, natural rubber plants, oil plants, grapes ,strawberries, raspberries, blackberries, spinach, lettuce, asparagus, cabbages, chinese kale, carrots, onions, tomatoes, cucumbers, pepper, eggplants, melons, paprika, chilli, roses, chrysanthemums, cotton and carnations. The plants can also be genetically modified.

The rate and frequency of use of the composition on the plant may vary within wide limits and depends on the specific pesticide, type of use, the nature of the soil, the method of application (pre- or post-emergence, etc.), the plant or pest to be controlled, the prevailing climatic conditions, and other factors governed by the method of application, the time of application and the target plant. A skilled person would be able to choose the appropriate parameters for the application.

The compositions comprising the pesticides of the present invention will usually be further processed to prepare formulations such as those typically used in the agricultural industry, for example water dispersible concentrates such as suspension concentrates (SC), water dispersible granules (WG), wettable powders (WP) or oil flowable dispersions (OD). One skilled in the art will be able to select the appropriate type of formulation for the intended product together with the required co-formulants and processing conditions to prepare it. The compositions prepared from the coated pesticide particles of the present invention may suitably contain further photo-protecting agents in addition to the coating on the particles. For example, sodium lignosulfonates employed as dispersing agents in granule compositions may provide further photo-protection to the pesticide particles in addition to the particle coating.

In a preferred embodiment, a composition of the invention in the form of a pepite water dispersible granules (WG), wherein a co-formulant in the formulation is a sodium lignosulfonates (commercially known, for example, as Polyfon H).

In an embodiment, the amount of pesticide (A) in a formulation of the present invention is from 0.1 to 50, preferably 0.5 to 20, especially 0.95 to 10, % based on the weight of the formulation.

The composition of the present invention may also be prepared as a concentrated product for use in preparing a formulation typically used in the agricultural industry. In such a case, the amount of pesticide (A) in the composition would be more, such as 50 to 99, preferably 75 to 98, especially 85 to 95, % based on the weight of the composition.

Whereas commercial products will preferably be formulated as concentrates (e.g., pre-mix composition (formulation)), the end user will normally employ dilute formulations (e.g., tank mix composition).

The tank-mix compositions are generally prepared by diluting with a solvent (for example, water) the one or more pre-mix compositions containing different pesticides, and optionally further auxiliaries. In this context, one of said pre-mix is the composition according to the present invention. The second pre-mix can be another composition containing a different pesticide.

Further, the compositions of the present invention, including the formulations, comprise a pesticide (B) other than an avermectin.

Examples of pesticide (B) include fungicides and other insecticides, including lufenuron, thiamethoxam, fipronil, imidacloprid and chlorantraniliprole.

In an embodiment, mean diameter of pesticide (B) particles', independently of pesticide (A), corresponds to the mean diameter of pesticide (A) particles' mentioned above.

In an embodiment, each pesticide (B) particle, independently of the coating in pesticide (A) or amount of coating on pesticide (A), is coated with a photo-protecting coating, as defined herein, in an amount that does not exceed 20% of the total weight of the pesticide (B) particles plus the coating (i.e. weight of the coated pesticide (B) particles). Preferably the amount of photo-protecting coating is from 0.01 to 20, such as 0.5 to 18, more preferably from 1 to 15, most preferably from 2 to 10, %, by weight of the coated pesticide (B) particles.

Therefore, the weight ratio of photo-protecting agent to pesticide (whether (A) alone or both (A) and (B)) in the composition according to the invention would never exceed 20:100, preferably the weight ratio is 0.01 to 20:100, more preferably 0.5 to 18:100; especially 1 to 15:100, advantageously 2 to 10:100.

In an embodiment, in the event pesticide (B) is coated, the photo-protecting coating for pesticide (A) and pesticide (B) is same or different.

In the event there are more than one pesticide (A) and/or more than one pesticide (B) in the composition, the photo-protecting coating can be the same or different for each pesticide (A) and each pesticide (B).

The compositions of the present invention find particular use in agriculture and related industry. The compositions are suitable for controlling the damage caused by pests, such as insects, fungi, weeds, on a plant, and for improving the growth of a plant.

Examples of insects include the order Lepidoptera are for example, Acleris spp., Adoxophyes spp., Aegeria spp., Agrotis spp., Alabama argillaceae, Amylois spp., Anticarsia gemmatalis, Archips spp., Argyrotaenia spp., Astylus atromaculatus, Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophlebia leucotreta, Cydia spp., Diatraea spp., Diparopsis castanea, Earias spp., Elasmopalpus spp., Ephestia spp., Eucosma spp., Eupoecilia ambiguella, Euproctis spp., Euxoa spp., Grapholita spp., Hedya nubiferana, Heliothis spp., Hellula undalis, Heteronychus arator, Hyphantria cunea, Keiferia lycopersicella, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypiella, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.; the insects of the order Coleoptera are for example, Agriotes spp., Anthonomus spp., Atomaria linearis, Chaetocnema tibialis, Conotrachelus spp., Cosmopolites spp., Curculio spp., Dermestes spp., Diabrotica spp., Dilopoderus spp., Epilachna spp., Eremnus spp., Heteronychus spp., Leptinotarsa decemlineata, Lissorhoptrus spp., Melolontha spp., Melolontha melolontha, Orycaephilus spp., Otiorhynchus spp., Phlyctinus spp., Popillia spp., Popillia japonica, Psylliodes spp., Rhizopertha spp., Scarabeidae, Somaticus spp., Sitophilus spp., Sitotroga spp., Tanymecus spp., Tenebrio spp., Tribolium spp., Trogoderma spp., Phyllotreta spp., Ceutorhynchus spp., Cyclocephala hirta, Cyclocephala pasadenae, Macrodactylus subspinosus, Macrodactylus uniformis and Zabrus spp.; the insects of the order Orthoptera are for example, Blatta spp., Blattella spp., Gryllotalpa spp., Leucophaea maderae, Locusta spp., Periplaneta spp. And Schistocerca spp.; the insects of the order Psocoptera are for example Liposcelis spp.; the insects of the order Anoplura are for example, Haematopinus spp., Linognathus spp., Pediculus spp., Pemphigus spp. And Phylloxera spp.; the insects of the order Isoptera are for example, Reticulitermes spp. Such as R. flavipes, R. 10hallus10, R. tibialis, R. virginicus, R. santonensis, R. hageni, Coptotermes spp., such as C. formosanus, Nasutitermes ssp. And Macrotermes spp.; the insects of the order Mallophaga are for example, Damalinea spp. And Trichodectes spp.; the insects of the order Thysanoptera are for example, Frankliniella spp., Hercinothrips spp., Taeniothrips spp., Thrips palmi, Thrips tabaci and Scirtothrips aurantii; the insects of the order Heteroptera are for example, Cimex spp., Distantiella theobroma, Dysdercus spp., Euchistus spp. Eurygaster spp. Leptocorisa spp., Nezara spp., Piesma spp., Rhodnius spp., Sahlbergella singularis, Scotinophara spp. And Triatoma spp.; the insects of the order Homoptera are for example, Aleurothrixus floccosus, Aleyrodes brassicae, Aonidiella spp., Aphididae, Aphis spp., Aspidiotus spp., Bemisia tabaci, Ceroplaster spp., Chrysomphalus aonidium, Chrysom11hallus dictyospermi, Coccus hesperidum, Empoasca spp., Eriosoma larigerum, Erythroneura spp., Gascardia spp., Laodelphax spp., Lecanium corni, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp., Psylla spp., Pulvinaria aethiopica, Quadraspidiotus spp., Rhopalosiphum spp., Saissetia spp., Scaphoideus spp., Schizaphis spp., Sitobion spp., Trialeurodes vaporariorum, Trioza erytreae and Unaspis citri; the insects of the order Hymenoptera are for example, Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. And Vespa spp.; the insects of the order Diptera are for example, Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp., Delia spp., Anopheles spp. And Tipula spp.; the insects of the order Siphonaptera are for example, Ceratophyllus spp. And Xenopsylla cheopis; the insects of the order Thysanura are for example, Lepisma saccharina; and amongst the representatives of the order Acarina, for example, Acarus siro, Aceria sheldoni, Aculus schlechtendali, Amblyomma spp., Argas spp., Boophilus spp., Brevipalpus spp., Bryobia praetiosa, Calipitrimerus spp., Chorioptes spp., Dermanyssus gallinae, Eotetranychus carpini, Eriophyes spp., Hyalomma spp., Ixodes spp., Olygonychus pratensis, Ornithodoros spp., Panonychus spp., Phyllocoptruta oleivora, Polyphagotarsonemus latus, Psoroptes spp., Rhipicephalus spp., Rhizoglyphus spp., Sarcoptes spp., Tarsonemus spp. And Tetranychus spp..

In the instance of one or more pesticide (B) is used in combination with pesticide (A), the composition of the present invention would be suitable for control of a wider spectrum of pests, such as fungi, weeds or nematodes.

The Pesticide Manual 14th edition published by the British Crop Protection Council in 2006 provides details of pesticides.

The following Examples illustrate the present invention and refer to the following materials: AtloxTM 4913 is an acrylic graft copolymer dispersant available from Croda; CeliteTM 209 is a diatomaceous earth available from Celite Corp.; DispergatorTM B is the sodium salt of sulfonated dibutylnaphthalene purchased from Ledertechnik GmbH; 2,6-di(tert-butyl)-4-methylphenol (BHT) was purchased from Sigma-Aldrich; emamectin benzoate technical grade is an insecticide from Syngenta; GeroponTM T77 is sodium N-methyl-N-oleyl taurate and GeroponTM TA72 is polycarboxylate dispersant both available from Rhodia; IrganoxTM 245 is an anti-oxidant available from Ciba Specialties; the lactose used was anhydrous tableting grade purchased from Fonterra Excipients GmbH; MorwetTM D425 is the sodium salt of sulfonated naphthalene-formaldehyde condensate available from Akzo Nobel; Oil Red OTM is an azo dye and was purchased from Sigma-Aldrich; PergopakTM M is a urea-formaldehyde polymer granule available from Albermarle Corp.; PolyfonTM H is a high molecular weight sodium lignosulfonate available from Meadwestvaco; ProxelTM GXL is a water dispersible solution of 1,2-benzisothiazol-3(2H)-one available from Arch Biocides; RhodopolTM 23 is a polysaccharide biopolymer available from Rhodia; RhodorsilTM EP6703 is a silicon antifoam powder available from Rhodia; SAGTM 1572 is a silicon oil emulsion available from GE Specialty Materials; SellogenTM DFL is a sodium alkyl naphthalene sulfonate available from Cognis; SyncrowaxTM BB4 is a synthetic beeswax available from Croda.; TinuvinTM 328 is a UV absorber of the hydroxyphenylbenzotriazole class available from BASF; UfoxaneTM 3A and UltrazineTM NA are sodium lignosulfonates available from Borregaard Industries; and urea, technical grade, was purchased from Atochem.

### EXAMPLE 1

This Example describes a process for coating pesticide particles with a photo-protecting compound using a modified air-jet mill as described in WO04054718. The process was operated under nitrogen gas with an injector pressure of 6.0bar and a milling chamber pressure of 5.0bar. Technical emamectin benzoate was fed into the mill at a throughput of 5.0kg per hour using a twin-screw powder feeder. The liquid injection nozzle and pump were heated to the requisite temperatures to maintain the coating material as a sprayable liquid (temperatures given as Pump T. and Nozzle T. in Table 1). The liquid injection rate was varied to control the coating thickness and the liquid injection pressure was maintained at between 4.5-5.Obar. The resulting samples of coated particles had number average particle sizes of 1.5-3.0µm and D[0.9]'s (the size below which 90% of the number of particles fall) of 4-7µm as measured in aqueous dispersion by laser light scattering (Malvern Mastersizer X).

**Table 1 (examples 1 F, 1 K, 1 L and 1 M do not belong to the invention)**

| Ex. | % w/w Coating (a) | Coating composition | Pump T. (°C) | Nozzle T. (°C) | Injection rate (b) |
|---|---|---|---|---|---|
| 1A | - | None (comparative example) | - | - | - |
| 1B | 5.0 | Irganox 245 | 100 | 110 | 260 |
| 1C | 2.5 | Irganox 245 | 100 | 110 | 125 |
| 1D | 2.0 | Irganox 245 | 100 | 110 | 100 |
| 1E | 0.2 | Irganox 245 | 100 | 110 | 10 |
| 1F | 2.0 | 2,6-di(tert-butyl)-4-methylphenol (BHT) | 90 | 100 | 100 |
| 1G | 10.0 | 1 part Irganox 245, 9 parts Syncrowax BB4 | 90 | 130 | 560 |
| 1H | 2.5 | 1 part Irganox 245, 9 parts Syncrowax BB4 | 90 | 130 | 125 |
| 11 | 2.5 | 3 parts Irganox 245, 1 part Oil Red O | 120 | 120 | 125 |
| 1J | 0.2 | 3 parts Irganox 245, 1 part Oil Red O | 120 | 120 | 10 |
| 1K | 10 | 1 part Oil Red O, 9 parts Syncrowax BB4 | 120 | 120 | 560 |
| 1L | 5.0 | Tinuvin 328 | 100 | 110 | 260 |
| 1M | 10 | Syncrowax BB4 | 120 | 120 | 560 |

| | | | | | |
|---|---|---|---|---|---|
| (a) Expressed as weight % of the total weight of the coated particles; (b) Injection rate gravimetrically controlled in units of g/hr. | | | | | |

### EXAMPLE 2

This Example describes a process for preparing suspension concentrate (SC) formulations from the coated particles of Example 1. The samples were prepared according to the following formula [Table 2a] and method:

**Table 2a**

| Component | Parts by weight |
|---|---|
| Coated particles | 10 parts |
| Atlox 4913 | 2 parts |
| Morwet D425 | 1.25 parts |
| SAG 1572 | 0.3 parts |
| Propylene glycol | 1 part |
| Rhodopol 23 | 0.4 parts |
| Proxel GXL | 0.1 parts |
| Tap water | 84.95 parts |

Morwet D425 and Atlox 4913 were dissolved in the tap water, the SAG 1572 was added and a coated pesticide powder according to Table 1 was blended in with high energy mixing (Polytron rotor-stator mixer). The remaining components were added and mixed until well dispersed. Table 2b shows which coated pesticide powders of Table 1 were used in this Example:

**Table 2b (examples 2g, 2H and 2I do not belong to the invention)**

| Example | Coated particles used |
|---|---|
| 2A | 1A |
| 2B | 1C |
| 2C | 1E |
| 2D | 1I |
| 2E | 1J |
| 2F | 1H |
| 2G | 1K |
| 2H | 1L |
| 2I | 1M |

### EXAMPLE 3

This Example describes a process for preparing soluble granule (SG) formulations from the coated particles of Example 1. The components were first thoroughly mixed using a powder-mixer (Eirich, lab scale) and then 9 parts by weight water were added and mixed to form a paste with a crumbly consistency. The paste was extruded using a dome extruder (Fuji) fitted with a 0.6mm screen and the granules were then dried in a fluid bed drier (Aeromatic) using an inlet temperature of 60°C. Drying was continued until an outlet temperature of 40°C was achieved. Tables 3a and 3b show the formulae used and which samples from Example 1 were involved:

**Table 3a**

| Example | 3A | 3B | 3C | 3D |
|---|---|---|---|---|
| Coated particles from Example 1 | 1A | 1B | 1B | 1A |
| | 5 parts | 5.25 parts | 5.25 parts | 5 parts |
| Geropon T77 | 7.5 parts | 7.5 parts | | 7.5 parts |
| Sellogen DFL | 1 part | 1 part | 1 part | 1 part |
| Polyfon H | | | 7.5 parts | |
| Rhodorsil EP6703 | 0.1 parts | 0.1 parts | 0.1 parts | 0.1 parts |
| Irganox 245 | | | | 5 parts |
| Lactose | to 100 parts | to 100 parts | to 100 parts | to 100 parts |

**Table 3b**

| Example | 3E | 3F | 3G | 3H | 3I |
|---|---|---|---|---|---|
| Coated particles from Example 1 | 1A | 1D | 1D | 1D | 1G |
| | 5 parts | 5.1 parts | 5.1 parts | 5.1 parts | 5.5 parts |
| Sopropon TA72 | 2 parts | 2 parts | 2 parts | 2 parts | 2 parts |
| Dispergator B | 5 parts | 5 parts | 5 parts | 5 parts | 5 parts |
| Ufoxane 3A | 10 parts | 10 parts | | 10 parts | 10 parts |
| Polyfon H | | | 10 parts | | |
| Rhodorsil EP6703 | 1 part | 1 part | 1 part | 1 part | 1 part |
| Pergopak M | 10 parts | 10 parts | 10 parts | 10 parts | 10 parts |
| Urea tech. | to 100 parts | to 100 parts | to 100 parts | to 100 parts | to 100 parts |

### EXAMPLE 4

This example describes a process for preparing water dispersible granule (WG) formulations from the coated particles of example 1 using a spray drying granulation technique. Ultrazine NA and Celite 209 were mixed in the ratios given in the following table into 25-30 parts of water by weight using a high-shear, rotor-stator mixer and then passed through a bead mill (Dynomill, 2mm glass beads, 80% bead charge). Rhodorsil EP6703 was added followed by the coated particles, which were fully dispersed into the slurry using the high shear mixer. The slurry was sprayed into a spray drier (Glatt, WG4) through a 1.8mm co-axial nozzle at a flow rate of 18 litres/hr (1.8bar) using a drying air throughput of 250m3/hr with an inlet temperature of 90°C. Drying was continued until an outlet temperature of 55°C was achieved.

Table 4 shows the formulae used and which samples from Example 1 were involved:

**Table 4**

| Example | 4A | 4B |
|---|---|---|
| Coated particles from Example 1 | 1A | 1D |
| | 5 parts | 5.1 parts |
| Ultrazine NA | 30 parts | 30 parts |
| Rhodorsil EP6703 | 1 part | 1 part |
| Celite 209 | to 100 parts | to 100 parts |

### EXAMPLE 5

This example demonstrates the improved photo-stability of the pesticide compositions containing coated particles. The formulations prepared in Examples 2, 3 and 4 were diluted in de-ionised water to give 50mg emamectin benzoate per litre. For each formulation tested, eight 2µl droplets were applied to a clean glass microscope slide and were allowed to dry prior to being covered with a UV transparent silica slide and placed in a Suntest (Hanau) which exposed the droplets to a xenon lamp simulating sunlight. After exposure, the slide was rinsed with 10ml acetonitrile/tetrahydrofuran/0.1% aqueous phosphoric acid (40/10/50 by weight) and the rinsing was subsequently analysed for emamectin benzoate content by high performance liquid chromatography coupled to a mass spectrometer. Between 5 and 8 slides were prepared for each formulation and were exposed for different times to give a photo-degradation loss curve which was used to calculate a half-life (T50) for each formulation. The improvement in photo-stability of each formulation is expressed as the ratio of the half-life of that formulation to the half-life of a similar, nonphoto-stabilised comparative example. ProclaimTM 05SG is a product of Syngenta and is a soluble granule composition containing 50g/kg of emamectin benzoate. Table 5 shows the formulations used and for each formulation the half-life divided by that of a Comparative Example:

**Table 5 (examples 2G, 2H and 2I do not belong to the invention)**

| Example | Photo-protecting coating | T50 / T50 (comp) (a) |
|---|---|---|
| Proclaim 05SG | None | Comparison to 2B-F |
| 2B | 2.5% Irganox 245 | 12.7 |
| 2C | 0.2% Irganox 245 | 8.9 |
| 2D | 2.5% 3 parts Irganox 245, 1 part Oil Red O | 22.5 |
| 2E | 0.2% 3 parts Irganox 245, 1 part Oil Red O | 10.0 |
| 2F | 2.5% 1 part Irganox 245, 9 parts Syncrowax BB4 | 14.2 |
| 2A | None | Comparison to 2G |
| 2G | 10% 1 part Oil Red O, 9 parts Syncrowax BB4 | 2.3 |
| 2H | 5% Tinuvin 328 | 2.5 |
| 2I | 10% Syncrowax BB4 | 1.4 |
| 3A | None | Comparison to 3B-D |
| 3B | 5% Irganox 245 | 3.6 |
| 3C | 5% Irganox 245 coating (7.5% Polyfon H in formulation) | 7.1 |
| 3D | No coating, 5% Irganox 245 in formulation | 2.8 |
| 3E | None | Comparison to 3F-I |
| 3F | 2% Irganox 245 | 1.1 |
| 3G | 2% Irganox 245 coating (10% Polyfon H in formulation) | 3.6 |
| 3H | 2% BHT | 1.3 |
| 3I | 10% 1 part Irganox 245, 9 parts Syncrowax BB4 | 2.8 |
| 4A | None (30% Ultrazine NA in formulation) | Comparison to 4B |
| 4B | 2% Irganox 245 coating (30% Ultrazine NA in formulation) | 2.2 |

| | | |
|---|---|---|
| (a) Ratio of half-life of sample with coated pesticide to half-life of comparative example. | | |

## Claims

1. A composition comprising a pesticide (A) which is emamectin benzoate and a photo-protecting agent,
wherein each emamectin benzoate particle is coated with the photo-protecting agent,
the mean diameter of the emamectin benzoate particles is from 1 to 10µm,
the weight of the photo-protecting agent is from 0.1 to 20% of the total weight of the emamectin benzoate particles plus the photo-protecting agent, and
wherein the photo-protecting agent is ethylenebis(oxyethylene)bis-(3-(5-tert-butyl-4-hydroxy-m-tolyl)-propionate).

2. A composition as claimed in claim 1, wherein the weight of the photo-protecting agent is from 1 to 15% of the total weight of the emamectin benzoate particles plus the photo-protecting agent.

3. A composition as claimed in claim 2, wherein the weight of the photo-protecting agent is from 2 to 10% of the total weight of the emamectin benzoate particles plus the photo-protecting agent.

4. A composition as claimed in any one of claim 1 to 3 where the composition further comprises one or more pesticide (B) other than an avermectin.

5. A composition as claimed in claim 4 wherein the mean diameter of the particles of the pesticide (B) is from 0.1 to 100µm.

6. A formulation which is a suspension concentrate, water dispersible granule, wettable powder or oil flowable dispersion and which comprises a composition as defined in any one of the preceding claims.

7. Use of a composition as defined in any one of claims 1 to 5 or a formulation as defined in claim 6 to control or combat an agricultural pest, with the proviso that the use for treatment of the animal body by surgery or therapy is excluded.

8. A process for preparing a composition as defined in any one of claims 1 to 5 comprising a coating step in which a coating is delivered to the surfaces of pesticide particles in a controlled manner without agglomeration of said particles.

9. An emamectin benzoate particle coated with a photo-protecting agent,
the mean diameter of the emamectin benzoate particle is from 1 to 10µm,
the total weight of the photo-protecting agent is from 0.1 to 20% of the total weight of the emamectin benzoate particle plus the photo-protecting agent, and
wherein the photo-protecting agent is ethylenebis(oxyethylene)bis-(3-(5-tert-butyl-4-hydroxy-m-tolyl)-propionate).

## Patentansprüche

1. Zusammensetzung, welche ein Pestizid (A), bei dem es sich um Emamectinbenzoat handelt, und ein photoprotektives Mittel umfasst,
wobei die Emamectinbenzoatpartikel jeweils mit dem photoprotektiven Mittel beschichtet sind,
der mittlere Durchmesser der Emamectinbenzoatpartikel 1 bis 10 µm beträgt,
das Gewicht des photoprotektiven Mittels 0,1 bis 20% des Gesamtgewichts von Emamectinbenzoatpartikeln plus photoprotektivem Mittel ausmacht und
wobei es sich bei dem photoprotektiven Mittel um Ethylenbis(oxyethylen)bis-(3-(5-tert.-butyl-4-hydroxy-m-tolyl)propionat) handelt.

2. Zusammensetzung nach Anspruch 1, wobei das Gewicht des photoprotektiven Mittels 1 bis 15% des Gesamtgewichts von Emamectinbenzoatpartikeln plus photoprotektivem Mittel ausmacht.

3. Zusammensetzung nach Anspruch 2, wobei das Gewicht des photoprotektiven Mittels 2 bis 10% des Gesamtgewichts von Emamectinbenzoatpartikeln plus photoprotektivem Mittel ausmacht.

4. Zusammensetzung nach einem der Ansprüche 1 bis 3, wobei die Zusammensetzung weiterhin ein oder mehrere von Avermectin verschiedene Pestizide (B) umfasst.

5. Zusammensetzung nach Anspruch 4, wobei der mittlere Durchmesser der Partikel an Pestizid (B) 0,1 bis 100 µm beträgt.

6. Formulierung, bei der es sich um ein Suspensionskonzentrat, ein wasserlösliches Granulat, ein Spritzpulver oder eine fließfähige Dispersion in Öl handelt und welche eine wie in einem der vorhergehenden Ansprüche definierte Zusammensetzung umfasst.

7. Verwendung einer wie in einem der Ansprüche 1 bis 5 definierten Zusammensetzung oder einer wie in Anspruch 6 definierten Formulierung zur Kontrolle bzw. Bekämpfung eines landwirtschaftlichen Schädlings, mit der Maßgabe, dass die Verwendung zur Behandlung des tierischen Körpers durch chirurgische Eingriffe oder Therapie ausgeschlossen ist.

8. Verfahren zur Herstellung einer wie in einem der Ansprüche 1 bis 5 definierten Zusammensetzung, welches einen Beschichtungsschritt umfasst, bei dem man auf die Oberflächen von Pestizidpartikeln in kontrollierter Weise ohne Agglomeration der Partikel eine Beschichtung aufbringt.

9. Mit einem photoprotektiven Mittel beschichtetes Emamectinbenzoatpartikel,
wobei der mittlere Durchmesser des Emamectinbenzoatpartikels 1 bis 10 µm beträgt,
das Gesamtgewicht des photoprotektiven Mittels 0,1 bis 20% des Gesamtgewichts von Emamectinbenzoatpartikel plus photoprotektivem Mittel beträgt und
wobei es sich bei dem photoprotektiven Mittel um Ethylenbis(oxyethylen)bis-(3-(5-tert.-butyl-4-hydroxy-m-tolyl)propionat) handelt.

## Revendications

1. Composition comprenant un pesticide (A) qui est le benzoate d'émamectine et un agent photo-protecteur, dans laquelle chaque particule de benzoate d'émamectine est revêtue par l'agent photo-protecteur,
le diamètre moyen des particules de benzoate d'émamectine va de 1 à 10 µm,
le poids de l'agent photo-protecteur constitue de 0,1 à 20% du poids total des particules de benzoate d'émamectine plus l'agent photo-protecteur, et
où l'agent photo-protecteur est l'éthylènebis-(oxyéthylène)bis-(3-(5-tertio-butyl-4-hydroxy-m-tolyl)-propionate).

2. Composition selon la revendication 1, dans laquelle le poids de l'agent photo-protecteur constitue de 1 à 15% du poids total des particules de benzoate d'émamectine plus l'agent photo-protecteur.

3. Composition selon la revendication 2, dans laquelle le poids de l'agent photo-protecteur constitue de 2 à 10% du poids total des particules de benzoate d'émamectine plus l'agent photo-protecteur.

4. Composition selon l'une quelconque des revendications 1 à 3, dans laquelle la composition comprend en outre un ou plusieurs pesticides (B) autres qu'une avermectine.

5. Composition selon la revendication 4, dans laquelle le diamètre moyen des particules du pesticide (B) va de 0,1 à 100 µm.

6. Formulation qui est un concentré en suspension, un granulé dispersable dans l'eau, une poudre mouillable ou une dispersion écoulable dans l'huile et qui comprend une composition telle que définie selon l'une quelconque des revendications précédentes.

7. Utilisation d'une composition telle que définie selon l'une quelconque des revendications 1 à 5 ou d'une formulation telle que définie selon la revendication 6, pour contrôler ou lutter contre un nuisible agricole, à condition que l'utilisation pour le traitement d'un organisme animal par chirurgie ou thérapie soit exclue.

8. Procédé de préparation d'une composition telle que définie selon l'une quelconque des revendications 1 à 5, comprenant une étape de revêtement dans laquelle un revêtement est apporté aux surfaces de particules de pesticide de manière contrôlée sans agglomération desdites particules.

9. Particule de benzoate d'émamectine revêtue par un agent photo-protecteur,
le diamètre moyen des particules de benzoate d'émamectine allant de 1 à 10 µm,
le poids total de l'agent photo-protecteur constituant de 0,1 à 20% du poids total des particules de benzoate d'émamectine plus l'agent photo-protecteur, et
où l'agent photo-protecteur est l'éthylènebis-(oxyéthylène)bis-(3-(5-tertio-butyl-4-hydroxy-m-tolyl)-propionate).
